# EUROPEAN PATENT SPECIFICATION

(11) **EP 1 461 870 B1**
(45) Date of publication and mention of the grant of the patent: **29.08.2007**
(21) Application number: 02745705.0
(22) Date of filing: 11.07.2002
(51) Int. Cl.: H04B 1/38

(54) **HIGH PERFORMANCE AUDIO COMMUNICATION SYSTEM FOR MOTORCYCLES**
HOCHLEISTUNGS-AUDIOKOMMUNIKATIONSSYSTEM FÜR MOTORRÄDER
SYSTEME DE COMMUNICATION AUDIO HAUTEMENT PERFORMANT POUR MOTOCYCLES

(30) Priority: 11.07.2001 IT MI20010148
(43) Date of publication of application: 29.09.2004
(73) Proprietor: BHM S.r.l., 20017 Rho MI (IT)
(72) Inventor: SIGALA, Valentina, I-20124 Milan (IT); GARAVAGLIA, Roberto, I-20014 Nerviano-Milan (IT)
(74) Representative: De Gregori, Antonella
(86) International application number: PCT/IB2002/002716
(87) International publication number: WO 2003/013014

(56) References cited:
- EP-A- 1 081 872
- US-A- 4 109 105

## Description

The present invention refers to a high performance audio communication system for motorcycles.

Devices for communication between driver and passenger of a motorcycle, which exploit the conventional interphone function, so as to allow motorcyclists to speak to one another, are known.

The vocal activation of the interphone function advantageously allows the annoying hum due to the wind as the motorcycle goes along if the driver and passenger are not speaking with each other to be eliminated.

Nevertheless, further audio communications between motorcyclists and the outside up to now remain impossible to carry out in a completely automatic manner and they still require manual operations, on the equipments components, which can cause fatal distractions, with extremely serious consequences above all in the case in which it is the driver who has to fiddle with the desired communication equipment.

Moreover, such operations, if carried out at relatively high speeds, can cause serious accidents and substantial damage, in particular harming the physical well-being of the motorcyclists themselves.

Document EP 1 081 872 discloses a radio communication system for vehicles which allows communication between passengers of the same vehicle and of other vehicles and comprises a radio communication apparatus mounted on each helmet to be worn by the vehicles passengers and a repeating apparatus mounted on the vehicles side, wherein the radio communication apparatuses mounted on the helmets communicate with each other through the repeating apparatuses.

Document US 4, 109, 105 describes a sound producing helmet for motorcycle riders which utilizes a pair of speakers, each secured within an opening in the lining of the motorcycle helmet. Each speaker is connected to a female receptacle secured within openings in the helmet. Further, an extensible cable Is provided with a pair of plugs, each adapted to be inserted into the female receptacles and each carrying one channel of a stereophonic audio voltage signal coupled into the cable by utilizing a multi-terminal plug adapted for insertion into a receptacle attached to a magnetic tape playback device attached to the body of a motorcycle.

The purpose of the present invention is, therefore that of indicating an audio communication system for motorcycles which avoids the aforementioned drawbacks and, in particular, that of indicating an audio communication system for motorcycles which allows the integration into a single product of the conventional function of interphone for motorcyclists and that of other apparatuses, suitable for creating a remote sound connection between the components of the motorcycle's equipment and the outside.

Another purpose of the present invention is that of indicating an audio communication system for motorcycles which allows a high level of fidelity in the communication to be achieved, allowing motorcyclists to speak with the outside and to receive further communications from the external environment.

A further purpose of the present invention is that of realising an audio communication system for motorcycles which is highly reliable, rich in functions which can be used by motorcyclists at a relatively low cost, with respect to the prior art.

The last but not least purpose of the present invention is that of realising an audio communication system for motorcycles which is simple and cost-effective to realise and which allows a motorcyclists to have a variety of conversations, without the motorcyclists being extremely engaged or distracted for the activation of such communications.

These and other purposes, according to the present invention, are achieved by means of a high performance audio communication system for motorcycles, according to claim 1, to which we refer for the sake of brevity. Further embodiments are defined in the dependent claims. Advantageously, the use of a switchboard allows the function of an interphone for motorcyclists to be combined in a single product with that of a loud-speaker device for mobile phones and RDS radios. The vocal activation of the interphone function allows communication to be obtained free from annoying humming due to the wind, as the motorcycle goes along, and can be actuated both manually and automatically by selecting two available levels of signal (high or low).

The switchboard, which is housed in the frame of the motorcycle, can also be used when there is no passenger, by just the driver as a telephone loud-speaker and/or for listening to the radio or to a further optional external audio source.

The telephone conversation is activated automatically when a call signal for the driver is detected, however it is possible to switch it to the passenger or vice-versa, by pressing the correct button found on a satellite device available to the driver and preferably positioned in correspondence with the motorcycle's handlebars.

It is also possible to manually adjust the listening volume, through a series of buttons, also located at the satellite device, for the two loudspeakers forming part of a pair of elements to be inserted inside the driver and passenger's helmets; such adjustment acts upon the audio sound level of the interphone and of the mobile phone.

The electronic switchboard is finally equipped with a suitable auxiliary audio socket for connection to a portable CD-player, to an audio cassette-player or to a vocal satellite navigation system, perhaps combined with a GPS system, and is adapted to the particular type of mobile phone, through a suitable telephone connection wire; during the telephone conversation, it is possible to foresee that the external source be disconnected on the channel in conversation to then reset at the end of the aforementioned conversation.

The connection between the various elements of the system can be carried out both through electrical connector and in a wireless manner and, in particular, via radio.

Further characteristics and advantages of an audio communication system for motorcycles shall become clearer from the following description, concerning an exemplificative and non-limiting embodiment referring to the attached drawings in which:
- figure 1 shows a schematic view relative to the various connections between the elements of the audio communication system for motorcycles, according to the present invention;
- figures 2A and 2B represent two schematic views, from the front and from above respectively, of an electronic management switchboard used in the audio communication system for motorcycles, according to the present invention;
- figures 3A and 3B show two views, from the front and rear respectively, of a satellite device used in the audio communication system for motorcycles, according to the invention;
- figure 4 represents a block diagram of a first non-limiting embodiment of connection between the various elements of the audio communication system for motorcycles, according to the present invention;
- figure 5 shows a block diagram of a second non-limiting embodiment of connection between the various elements of the audio communication system for motorcycles, according to the present invention.

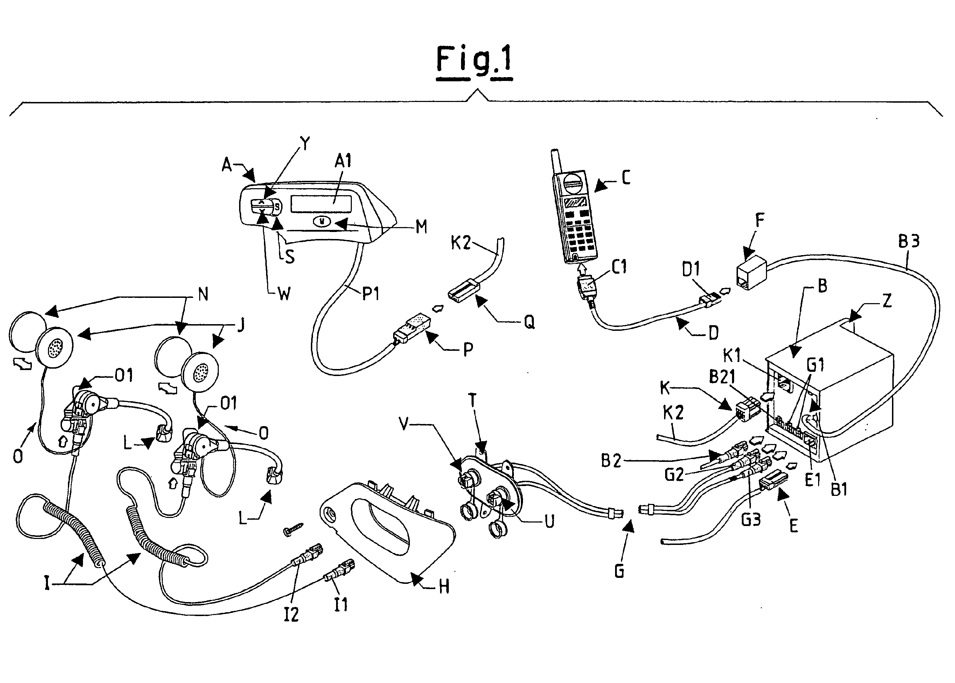

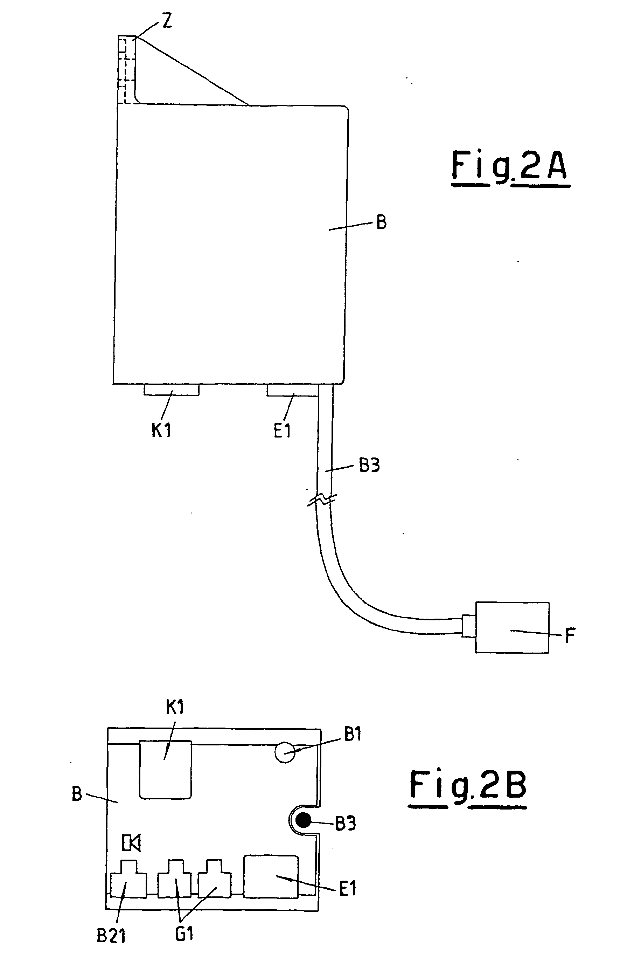

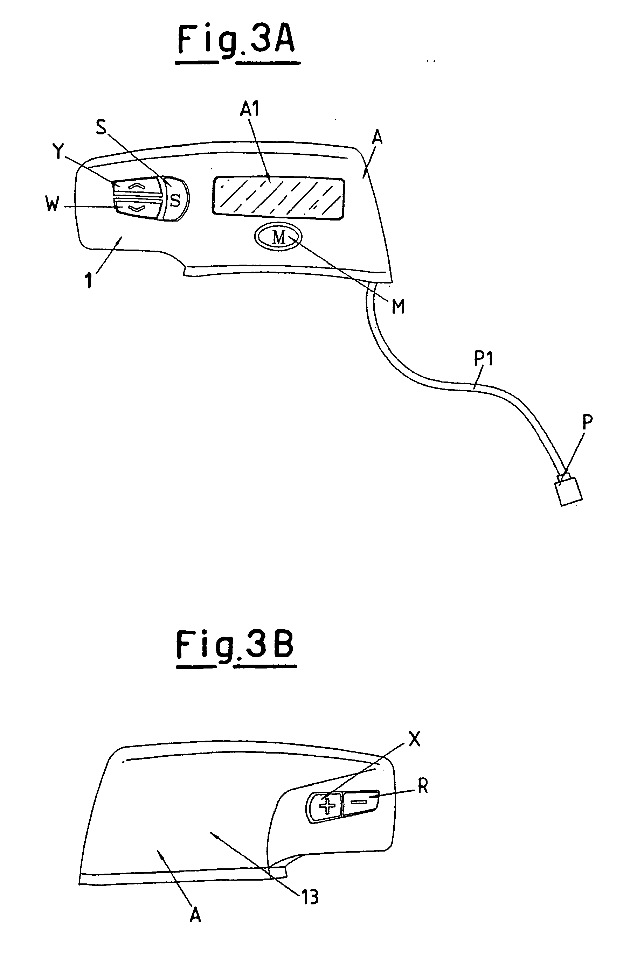

With particular reference to figures 1, 2A, 2B, 3A, 3B and 4, which specifically refer to a version of electrical connection with connection wires, the audio system according to the present invention comprises an electronic management switchboard, generically indicated with B and equipped with an attachment plate Z, a satellite visualisation and command device A for the user and a pair of elements O, which include at least one microphone L and at least one loudspeaker, usually assembled inside an earpiece or headphones J.

Each element O further comprises a support O1 for mounting each component of the motorcycle's equipment inside the helmet.

Moreover, the microphone L can be replaced by a laringophone, to be suitably applied to the helmet chin strap, whereas the earpieces J can advantageously have a portion N made of velcro for attaching the loudspeakers into the helmet of each motorcyclist; the introduction of the laringophone allows the humming of the wind and the general noisyness to be eliminated during the conversation between pilot and passenger.

The shaft of the microphone L is advantageously equipped with elastic metal clips for attachment to the lower rim of the helmet, whereas the earpieces J are fixed inside the helmet, at the level of the ear, through the velcro N.

The audio communication system, object of the present invention, also comprises two spriralling wires I for the electrical connection of the elements O1, connected to a wire support plate T, in turn housed inside a sparking plug inspection door H previously mounted onto the motorcycle, and two smooth cables G for the electrical connection of the switchboard B; the cables G, coming from the driver connections U and passenger connections V to the elements O1, are inserted into specific seats G1 of the switchboard B, through interphone connectors G2, G3, and, moreover, the aforementioned switchboard B furthermore has an entry El for housing a power supply connector E, which can be taken from the battery of the motorcycle, a seat B1 for an external audio socket, an outlet K1 for the connection, through a jack K, of the cable K2 for connection to the satellite device A and a seat B21 for a connector B2 for optional external diffusors B4.

A telephone cable B3 as output from the switchboard B carries a connector F which can be used for the insertion of a plug D1 of a telephone cable D, suitable for the type of mobile phone used, which is connected to the mobile phone C, through the jack C1; finally, the satellite device A is connected to the motorcycle, in correspondence with one of its handlebars, through the connector Q of the cable K2, which receives the plug P connected to the output cable P1 from the satellite A.

In particular, the satellite device A typically foresees the realisation, inside a shaped shell and on its front surface 1, of a visor A1, of a function menu button M (menu of the possible functions), of a selection button S and of two up and down scroll buttons Y, W, whereas, on the rear surface 13, two audio volume adjustment buttons X, R are foreseen.

The installation procedure of the audio communication system on the motorcycle takes place by firstly connecting and activating the switchboard B.

Regarding this, it is necessary to remove the saddle and the plug which joins the rod of the hydraulic piston to the casing of the helmet storage space, thus mounting the sparking plug inspection door H comprising the two electric output cables G; then the two electric cables G of the interphone are passed along the frame fixing them to the frame itself, through suitable clamping bands, and they are made to come out from the housing space of the motorcycle object holder, situated near to the handlebars.

Then the switchboard B is fixed to the relative attachment plate Z, suitably connecting the cables of the housing space of the objects holder and the remaining electric cabling and, after having remounted the object holder space inside its own seat, the telephone cable B3 of the switchboard B is passed.

Then the oil pump cover, arranged on the side of the handlebars, is removed and the satellite device A is mounted in its place, positioning the radio interphone and the relative power supply cable for connecting it to the arrangement located below the satellite A.

The final assembly foresees the insertion of the plugs 11, 12 of the elements O comprising microphone L and earpiece J in the appropriate sockets U, V assembled on the sparking plug inspection cover H and relative to the driver and passenger.

After having correctly installed the switchboard B onto the motorcycle, the audio communication system is ready for operation.

In practice, by taking the ignition key into ignition position, the interphone automatically begins to operate with the less sensitive level of activation; moreover, it is always possible to insert the interphone function manually and to adjust the desired volume through the buttons X, R of the satellite device A, whereas the level of vocal activation can be switched between two positions, high and low respectively.

Finally, the interphone activates automatically if the driver or passenger of the motorcycle speak and the interphone mode remains active for a period of about 20 seconds from when the last person spoke.

A mobile phone C is connected to the switchboard B through a suitable cable D, so that, when a telephone call arrives, a tone is heard by both conversors (passenger and driver), at the end of which the conversation is switched to the driver, with the possibility of passing it to the passenger through the button Y of the satellite A; it is also possible to momentarily interrupt the telephone conversation with the button W of the satellite A to pass to interphone and, then, to return to the conversation by pressing the same button again.

Regarding this, it is necessary to set one's own mobile phone C with the automatic reply function in order to avoid having to press a button to take a call.

In any case, when a phone call arrives, the switchboard B, emits a brief warning sound which can be heard on both the loudspeakers of the earpieces J, possibly accompanied by the ring tone of the mobile phone C; when the motorcycle is switched off, if a phone conversation is in progress, the switchboard B remains active until the end of the communication. Besides the radio, interphone and loud-speaker function, the possibility exists of connecting a walkman or portable CD player to the switchboard B. During the conversation in interphone mode, the audio coming from the radio or from the external source remains in the background at a lower volume. The switching on and off of the audio system according to the invention takes place by pressing the button M of the satellite device A for a prolonged period (more than 4 seconds); when the motorcycle is started up, if the system had previously been turned off, an initial step is visualised on the visor A1, at the end of which it will return into the previous position (off).

Alternatively, the manual activation and deactivation of the interphone takes place by briefly pressing the button M of the satellite A twice; after manual deactivation, the interphone passes to automatic with the less sensitive level of activation (low).

In the same way, the switching on and off of the radio takes place by briefly pressing the button S of the satellite A. Manual tuning is achieved by briefly pressing the button M and holding down the buttons Y (tune up) or W (tune down), in order. Automatic tuning is obtained by briefly pressing the buttons M and Y or W in order. Memory scanning takes place by briefly pressing the buttons Y or W, whereas the RDS (Radio Data System) function can be activated by briefly pressing the buttons M and R in order. Moreover, it is possible to carry out manual memorisation of preferred radio stations, allowing the person receiving to automatically tune into the alternative frequency which is stronger than the one being listened to at that time relative to the same channel or by activating the "Traffic Announcement" function which usually interrupts the sound coming from possible external sources to allow the traffic report to be heard.

The manual passage of the loud-speaker telephone conversation between driver and passenger is carried out by briefly pressing the button Y, whereas the manual passage of the conversation between interphone and loud-speaker telephone modes is obtained by briefly pressing the button W.

The visor A1 allows a whole series of operating icons to be visualised, which describe the modes concerning: volume adjustment, inserted headphones, non-inserted passenger headphones, non-inserted driver headphones, active interphone, manual interphone, incoming telephone call, incoming telephone call with only the driver's headphones inserted, incoming telephone call with only the passenger's headphones inserted, telephone communication in progress with the driver, telephone communication in progress with the passenger, interphone in telephone conversation.

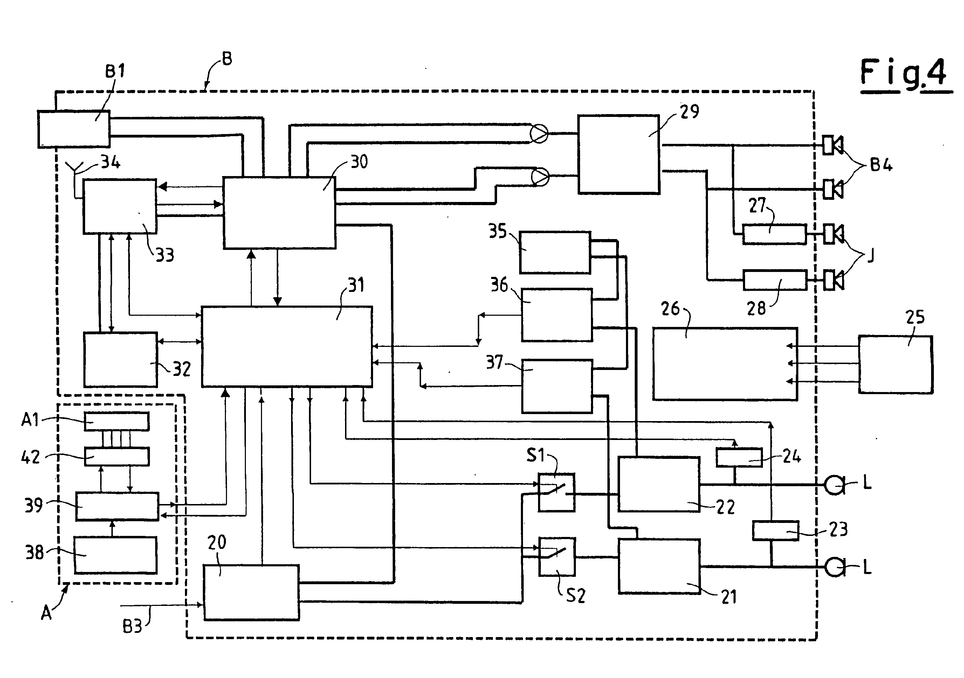

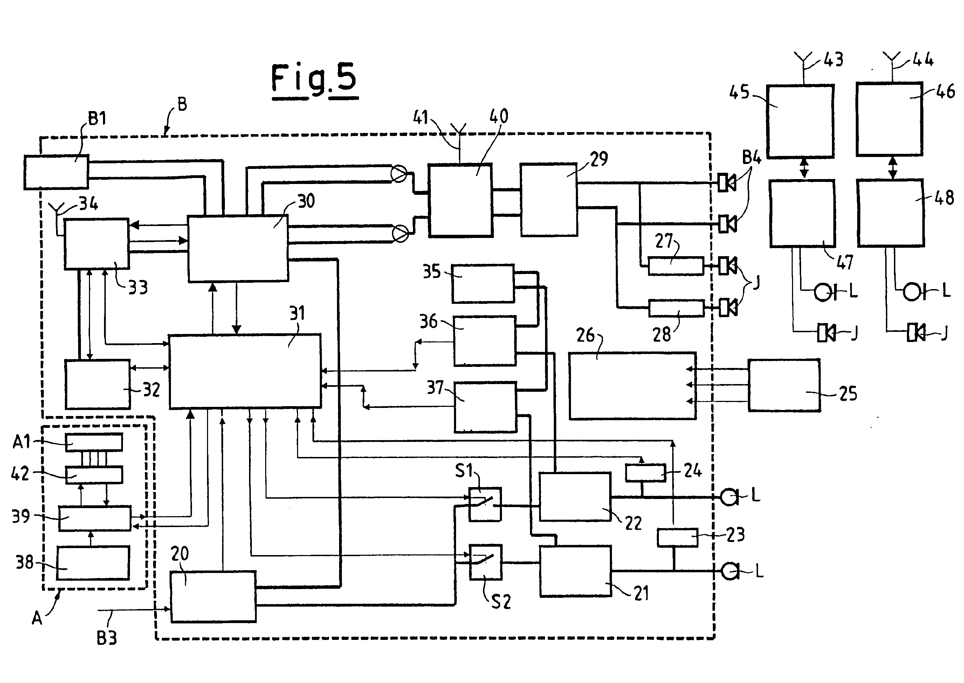

Figures 4 and 5 respectively represent two block diagrams regarding the circuit components present inside the switchboard B and of the satellite device A, in the case in which the communication takes place through electrical cable connections or wireless electrical connections, respectively.

In particular, the satellite device A comprises a keyboard command block 38, a microcontroller 39, which controls the operation of the entire satellite A, and a driver 42 connected to the visor A1.

Moreover, the switchboard B foresees the overall management of a microcontroller 31, which communicates with a block 30, suitable for supplying in output the stereophonic audio signals to be supplied to an amplifier 29 and from here, through respective waiting blocks 27, 28, to the earpieces J of the driver and of the passenger, and to an optional external output B4.

Also connected to the microcontroller 31 and to the block 30, there are a radio tuner 33, equipped with an antenna 34, an RDS decoder 32 and an interface 20, by means of which the telephone signal present along the connection B3 is managed; in the same way the same microcontroller 31 communicates with the control device 39 for the satellite device A and supplies in output a series of command signals, suitably amplified by the amplifiers 21, 22, for the switches S1, S2, which carry out or do not carry out the activation of the microphones L of the driver and of the passenger, at levels of sensitivity determined by potentiometers 23, 24, according to the levels of activation foreseen by the vocal sensors 35, 36, 37.

Finally, a supply, protection and filtering circuit block 26 oversees the general operation of the audio system based upon the commands coming from the ignition and supply block of the motorcycle 25.

The block diagram of figure 5 refers to a wireless connection between the switchboard B and the microphone-earpiece groups with which the driver and passenger of the motorcycle are equipped; in particular, according to the illustrated embodiment, it is possible to use a satellite device A and a switchboard B with analogous circuit components, with respect to the devices used for the cabled configuration, so as to avoid complete replacement of the apparatus in the case of variation of the chosen method of connection.

In this way, indeed, it is necessary to foresee just the installation of a receiver-transmitter module 40 (which can also be connected to the switchboard B through an external connector), equipped with a relative antenna 41 and connected to amplifier device 29 of the incoming signals to the earpieces J of the driver and passenger; the aforementioned receiver-transmitter module 40 is capable of communicating via radio sending signals which are captured by the antennae 43, 44, respectively associated with the receiver-transmitter modules 45, 46 foreseen inside the microphone-loudspeaker groups worn by the driver and by the passenger of the motorcycle.

The receiver-transmitter modules 45, 46 are therefore connected to supply and amplifying groups for the signal 47, 48, respectively connected to the microphone L and to the earpiece J of the driver and to the analogous apparatus worn by the passenger.

From the description which has been made the characteristics of the high performance audio communication system for motorcycles, which is object of the present invention, can be seen clearly, just as the advantages can also be seen clearly.

Finally, it is clear that numerous variants can be introduced to the audio communication system in question, without for this reason departing from the novelty principles inherent to the inventive idea, just as it is clear that, in the practical embodiment of the invention, the materials, the shapes and the sizes of the illustrated details can be whatever according to the requirements and they can be replaced with others which are technically equivalent.

## Claims

1. High performance audio communication system for motorcycles, of the type suitable for realising an interphone function between the driver and the passenger of the motorcycle wherein said interphone function can be actuated manually or automatically; said system comprising at least one electronic management switchboard (B) connected to at least one satellite device (A), used for visualising and setting commands and/or functions by a user, said switchboard (B) being supplied when the motorcycle is turned on and furthermore being connected to a plurality of audio groups (O), comprising at least one vocal detection device (L) and at least one loudspeaker, complete with a support (O1) for assembly inside helmets of at least one of the driver or the passenger, to at least one radio tuner (33) and to at least one mobile phone (C), so as to allow interphone communications, remote communications, through said mobile phone (C), in hands-free mode, and to allow at least one external source of audio signals to be listened to **characterised in that** the automatic actuation of said interphone function is performed by vocal activation.

2. High performance audio communication system for motorcycles according to claim 1, **characterised in that** said external sources of audio signals comprise radio stations and/or sound reproduction means.

3. High performance audio communication system for motorcycles according to claim 1, **characterised in that** the level of the vocal activation can be switched between two positions, high and low respectively.

4. High performance audio communication system for motorcycles according to claim 1, **characterised in that** said switchboard (B) is housed inside the frame of said motorcycle and can be used by at least one of the driver or the passenger of the motorcycle like telephone loudspeaker and/or for listening to radio channels or further external audio sources.

5. High performance audio communication system for motorcycles according to claim 4, **characterised in that** said telephone communication activates automatically when a call signal towards at least one of the driver or the passenger of the motorcycle is detected, said communication being able to be switched to further components of the equipment through manual command set on said satellite device (A).

6. High performance audio communication system for motorcycles according to claim 1, **characterised in that** said satellite device (A) foresees a plurality of buttons for regulating the listening volume for said loudspeakers, said regulation being suitable for acting upon audio listening levels, of the interphone and of said mobile phone (C), said audio communications being able to be selected by the user as he listens.

7. High performance audio communication system for motorcycles according to claim 1, **characterised in that** said vocal detection device (L) consists of at least one microphone and/or at least one laringophone, to be applied to an attachment band for said helmet.

8. High performance audio communication system for motorcycles according to claim 1, **characterised in that** said loudspeakers are assembled inside earpieces or headphones (J) fixed inside said helmets.

9. High performance audio communication system for motorcycles according to claim 1, **characterised in that** said audio groups (O) are electrically connected, by means of spiralled cables (I), to a support plate (T) housed inside a previously mounted sparking plug inspection door (H) of the motorcycle, said audio group (O) being furthermore connected to said switchboard (B) through smooth cables (G) coming from connection means (U, V) of said support plate (T).

10. High performance audio communication system for motorcycles according to claim 1, **characterised in that** said satellite device (A) is installed in correspondence with one of the handlebars of said motorcycle and foresees, inside a shaped shell, at least one visualisation device (A1) and a series of function buttons (M, S, Y, W) and audio volume regulation buttons (X, R).

11. High performance audio communication system for motorcycles according to claim 1, **characterised in that** said audio communications can be switched between said audio groups (O) and can furthermore be interrupted and resumed by at least one user, each of said audio communications being able to be selected in the background with respect to another communication at a higher volume.

12. High performance audio communication system for motorcycles according to claim 1, **characterised in that** said switchboard (B) is electrically connectable to at least one walkman or portable CD-player.

13. High performance audio communication system for motorcycles according to claim 1, **characterised in that** said satellite device (A) comprises a keyboard command block (38), a microcontroller (39), which controls the operation of the entire satellite (A), and a driver (42) connected to the visualisation device (A1).

14. High performance audio communication system for motorcycles according to claim 1, **characterised in that** said switchboard (B) comprises at least one microcontroller (31), which supplies audio signals in output to an amplifier (29) and from here, through respective waiting blocks (27, 28), to said loudspeakers and to possible further external outlets (B4).

15. High performance audio communication system for motorcycles according to claim 14, **characterised in that** said microcontroller (31) is connected to a radio tuner (33), equipped with an antenna (34), to a RDS decoder (32) and to an interface (20), by means of which the telephone signal is managed, said microcontroller (31) being suitable for communicating with a control device (39) of said satellite device (A) and being suitable for supplying in output a series of command signals amplified by a plurality of amplifier means (21, 22), based upon engagement by switching devices (S1, S2), which activate or do not activate said microphones (L) of the audio groups (O) at levels of sensitivity determined by potentiometers (23, 24) and according to activation levels foreseen by a series of vocal sensors (35, 36, 37).

16. High performance audio communication system for motorcycles according to claim 15, **characterised in that** at least one supply, protection and filtering circuit block (26) oversees the general operation of the switchboard (B), based upon the commands coming from ignition and supply means (25) of the motorcycle.

17. High performance audio communication system for motorcycles according to claim 1, **characterised in that** said switchboard (B) and said audio groups (O) communicate by means of a wireless transmission of the signal and, in particular, are connected via radio.

18. High performance audio communication system for motorcycles according to claim 17, **characterised in that** at least one first receiver-transmitter module (40), equipped with a relative antenna (41), is connected to at least one amplifier device (29), inside said switchboard (B), of the incoming signals to said loudspeakers of the audio groups (O), said first receiver-transmitter module (40) being capable of sending signals, which are captured by at least one antenna (43, 44), associated with at least one second receiver-transmitter module (45, 46), foreseen inside said audio groups (O) and connected to supply and amplification groups (47, 48) of the signal respectively connected to a microphone (L) and to an earpiece (J) of said audio groups (O).

## Patentansprüche

1. Hochleistungs-Audiokommunikationssystem für Motorräder von der zum Verwirklichen einer Gegensprechanlagenfunktion zwischen dem Fahrer und dem Beifahrer des Motorrads geeigneten Art, wobei die Gegensprechanlagenfunktion manuell oder automatisch angesteuert werden kann, wobei dieses System mindestens ein elektronisches Betriebsschaltwerk (B) umfasst, welches mit mindestens einem Satellitengerät (A) verbunden ist, das zum Visualisieren und Einstellen von Befehlen und/oder Funktionen durch einen Benutzer verwendet wird, wobei dieses Schaltwerk (B) versorgt wird, wenn das Motorrad eingeschaltet wird und weiterhin verbunden ist mit einer Vielzahl von Audiogruppen (O), welche zumindest eine Sprachdetektionsvorrichtung (L) und mindestens einen Lautsprecher samt einem Träger (O1) zum Zusammenfügen innerhalb von Helmen von zumindest dem Fahrer oder dem Beifahrer umfassen, mit mindestens einem Radioempfänger (33) und mit mindestens einem Mobiltelefon (C), um Gegensprechanlagen-Kommunikationen, Fernkommunikationen durch das Mobiltelefon (C) im Freihandmodus zu erlauben und um das Anhören von mindestens einer externen Quelle von Audiosignalen zu erlauben, **dadurch gekennzeichnet, dass** das automatische Ansteuern der Gegensprechanlagenfunktion durch Sprachaktivierung geleistet wird.

2. Hochleistungs-Audiokommunikationssystem für Motorräder nach Anspruch 1, **dadurch gekennzeichnet, dass** die externen Quellen von Audiosignalen Radiosender und/oder Klangwiedergabemittel umfassen.

3. Hochleistungs-Audiokommunikationssystem für Motorräder nach Anspruch 1, **dadurch gekennzeichnet, dass** der Sprachaktivierungspegel zwischen zwei Einstellungen, nämlich hoch bzw. niedrig, geschaltet werden kann.

4. Hochleistungs-Audiokommunikationssystem für Motorräder nach Anspruch 1, **dadurch gekennzeichnet, dass** das Schaltwerk (B) innerhalb des Rahmens des Motorrads aufgenommen ist und zumindest vom Fahrer oder dem Beifahrer des Motorrads wie Telefonlautsprecher und/oder zum Anhören von Radiokanälen oder weiteren externen Audioquellen verwendet werden kann.

5. Hochleistungs-Audiokommunikationssystem für Motorräder nach Anspruch 4, **dadurch gekennzeichnet, dass** sich die Telefonkommunikation automatisch aktiviert, wenn ein Anrufsignal für zumindest den Fahrer oder den Beifahrer des Motorrads detektiert wird, wobei die Kommunikation zu weiteren Komponenten der Anlage durch manuelle Befehlseinstellung an dem Satellitengerät (A) geschaltet werden kann.

6. Hochleistungs-Audiokommunikationssystem für Motorräder nach Anspruch 1, **dadurch gekennzeichnet, dass** das Satellitengerät (A) eine Vielzahl von Knöpfen zum Regulieren der Hörlautstärke für die Lautsprecher vorsieht, wobei die Regulierung dazu geeignet ist, auf den Audiohörpegel der Gegensprechanlage und des Mobiltelefons (C) zu wirken, wobei die Audiokommunikationen durch den Benutzer beim Hören ausgewählt werden können.

7. Hochleistungs-Audiokommunikationssystem für Motorräder nach Anspruch 1, **dadurch gekennzeichnet, dass** die Sprachdetektionsvorrichtung (L) aus zumindest einem Mikrofon und/oder zumindest einem Halsmikrofon zum Anbringen an einem Befestigungsband für den Helm besteht.

8. Hochleistungs-Audiokommunikationssystem für Motorräder nach Anspruch 1, **dadurch gekennzeichnet, dass** die Lautsprecher zusammengesetzte Innenohrhörer oder Kopfhörer (J) sind, welche auf der Innenseite der Helme befestigt sind.

9. Hochleistungs-Audiokommunikationssystem für Motorräder nach Anspruch 1, **dadurch gekennzeichnet, dass** die Audiogruppen (O) mittels spiralisierten Kabeln (I) elektrisch mit einer Trägerplatte (T) verbunden sind, welche innerhalb einer zuvor angebrachten Zündkerzenüberprüfungstür (H) des Motorrads aufgenommen ist, wobei die Audiogruppe (O) weiterhin mit dem Schaltwerk (B) durch glatte Kabel (G), welche von Verbindungsmitteln (U, V) der Trägerplatte (T) kommen, verbunden ist.

10. Hochleistungs-Audiokommunikationssystem für Motorräder nach Anspruch 1, **dadurch gekennzeichnet, dass** das Satellitengerät (A) in Entsprechung mit einer der Lenkstangen des Motorrads angebracht ist und innerhalb eines geformten Gehäuses mindestens eine Visualisierungsvorrichtung (A1) und eine Reihe von Funktionsknöpfen (M, S, Y, W) und Audiolautstärkeregelungsknöpfen (X, R) vorsieht.

11. Hochleistungs-Audiokommunikationssystem für Motorräder nach Anspruch 1, **dadurch gekennzeichnet, dass** die Audiokommunikationen zwischen den Audiogruppen (O) geschaltet werden können und außerdem durch mindestens einen Benutzer unterbrochen und fortgesetzt werden können, wobei jede der Audiokommunikationen im Hintergrund in Bezug auf eine andere Kommunikation mit einer höheren Lautstärke ausgewählt werden kann.

12. Hochleistungs-Audiokommunikationssystem für Motorräder nach Anspruch 1, **dadurch gekennzeichnet, dass** das Schaltwerk (B) mit mindestens einem Walkman oder tragbaren CD-Spieler elektrisch verbindbar ist.

13. Hochleistungs-Audiokommunikationssystem für Motorräder nach Anspruch 1, **dadurch gekennzeichnet, dass** das Satellitengerät (A) einen Befehlstastenblock (38), einen Mikrocontroller (39), welcher den Betrieb des gesamten Satelliten (A) steuert, und einen mit der Visualisierungsvorrichtung (A1) verbundenen Treiber (42) umfasst.

14. Hochleistungs-Audiokommunikationssystem für Motorräder nach Anspruch 1, **dadurch gekennzeichnet, dass** das Schaltwerk (B) mindestens einen Mikrocontroller (31) umfasst, welcher im Ausgang Audiosignale an einen Verstärker (29) und von hier, durch entsprechende Warteblöcke (27, 28), zu den Lautsprechern und zu möglichen weiteren externen Auslässen (B4) liefert.

15. Hochleistungs-Audiokommunikationssystem für Motorräder nach Anspruch 14, **dadurch gekennzeichnet, dass** der Mikrocontroller (31) verbunden ist mit einem mit einer Antenne (34) ausgestattetem Radioempfänger (33), mit einem RDS-Decoder (32) und mit einer Schnittstelle (20), mittels welcher das Telefonsignal gehandhabt wird, wobei der Mikrocontroller (31) zur Kommunikation mit einer Steuervorrichtung (39) des Satellitengeräts (A) geeignet ist und im Ausgang zum Bereitstellen einer Reihe von durch eine Vielzahl von Verstärkungsmitteln (21, 22) verstärkten Steuersignalen geeignet ist, basierend auf einem Eingreifen durch Schaltvorrichtungen (S1, S2), welche die Mikrofone (L) der Audiogruppen (O) bei durch Potentiometer (23, 24) bestimmten Empfindlichkeitspegeln und entsprechend zu Aktivierungspegeln, welche durch eine Reihe von Sprachsensoren (35, 36, 37) vorgesehen sind, aktivieren oder nicht aktivieren.

16. Hochleistungs-Audiokommunikationssystem für Motorräder nach Anspruch 15, **dadurch gekennzeichnet, dass** mindestens ein Versorgungs-, Schutz- und Filterungsschaltkreisblock (26) den allgemeinen Betrieb des Schaltwerks (B), basierend auf den von der Zündung und den Versorgungsmitteln (25) des Motorrads kommenden Befehlen, überwacht.

17. Hochleistungs-Audiokommunikationssystem für Motorräder nach Anspruch 1, **dadurch gekennzeichnet, dass** das Schaltwerk (B) und die Audiogruppen (O) mittels einer drahtlosen Übertragung des Signals kommunizieren und insbesondere über Funk verbunden sind.

18. Hochleistungs-Audiokommunikationssystem für Motorräder nach Anspruch 17, **dadurch gekennzeichnet, dass** zumindest ein erstes Empfänger-Sender-Modul (40), welches mit einer zugehörigen Antenne (41) ausgestattet ist, mit mindestens einer Verstärkervorrichtung (29), innerhalb des Schaltwerks (B), der Eingangssignale zu den Lautsprechern der Audiogruppen (O) verbunden ist, wobei das erste Empfänger-Sender-Modul (40) zum Senden von Signalen in der Lage ist, welche durch mindestens eine Antenne (43, 44) aufgefangen werden, welche mit mindestens einem zweiten Empfänger-Sender-Modul (45, 46) verbunden ist, welches innerhalb der Audiogruppen (O) vorgesehen ist und verbunden ist mit Versorgungs- und Verstärkergruppen (47, 48) des Signals, bzw. verbunden ist mit einem Mikrofon (L) und mit einem Ohrhörer (J) der Audiogruppen (O).

## Revendications

1. Système de communication audio à hautes performances pour motocyclettes, du type approprié pour remplir une fonction d'interphone entre le conducteur et le passager de la motocyclette, ladite fonction d'interphone pouvant être activée manuellement ou automatiquement, ledit système comprenant au moins un tableau de gestion électronique (B) relié à au moins un dispositif satellite (A), permettant à un utilisateur de visualiser et régler des commandes et/ou des fonctions, ledit tableau (B) étant alimenté lorsque la mobylette est démarrée et relié en outre à une pluralité de groupes audio (O), comprenant au moins un dispositif de détection vocale (L) et au moins un haut-parleur, avec en plus un support (01) permettant de raccorder des casques intérieurs, d'au moins un parmi le conducteur ou le passager, à au moins un tuner radio (33) et au moins un téléphone mobile (C), de manière à permettre des communications par interphone, des communications à distance, par le biais dudit téléphone mobile (C), en mode mains libres, et à permettre d'écouter au moins une source externe de signaux audio, **caractérisé en ce que** l'activation automatique de ladite fonction d'interphone est effectuée par commande vocale.

2. Système de communication audio à hautes performances pour motocyclettes selon la revendication 1, **caractérisé en ce que** lesdites sources externes de signaux audio comprennent des stations radio et/ou des moyens de reproduction sonore.

3. Système de communication audio à hautes performances pour motocyclettes selon la revendication 1, **caractérisé en ce que** le niveau de l'activation vocale peut être commuté entre deux positions, respectivement haute et basse.

4. Système de communication audio à hautes performances pour motocyclettes selon la revendication 1, **caractérisé en ce que** ledit tableau (B) est placé à l'intérieur du châssis de ladite motocyclette et peut être utilisé par au moins un parmi le conducteur ou le passager de la motocyclette comme haut-parleur de téléphone et/ou pour écouter des canaux radiophoniques ou d'autres sources audio externes.

5. Système de communication audio à hautes performances pour motocyclettes selon la revendication 4, **caractérisé en ce que** ladite communication téléphonique est automatiquement activée lorsqu'un signal d'appel en direction d'au moins un parmi le conducteur ou le passager de la motocyclette est détecté, ladite communication étant apte à être commutée vers d'autres composants de l'équipement par une commande manuelle réglée sur le dispositif périphérique (A).

6. Système de communication audio à hautes performances pour motocyclettes selon la revendication 1, **caractérisé en ce qu'**il est prévu sur ledit dispositif périphérique (A) une pluralité de boutons destinés à régler le volume d'écoute desdits haut-parleurs, ledit réglage permettant d'agir sur les niveaux d'écoute audio, de l'interphone et dudit téléphone mobile (C), lesdites communications audio pouvant être sélectionnées par l'utilisateur lorsque il est en position d'écoute.

7. Système de communication audio à hautes performances pour motocyclettes selon la revendication 1, **caractérisé en ce que** ledit dispositif de détection vocale (L) est constitué d'au moins un microphone et/ou d'au moins un laryngophone destiné à être appliqué sur une bande de fixation dudit casque.

8. Système de communication audio à hautes performances pour motocyclettes selon la revendication 1, **caractérisé en ce que** lesdits haut-parleurs sont montés à l'intérieur d'oreillettes ou d'écouteurs (J) fixés à l'intérieur desdits casques.

9. Système de communication audio à hautes performances pour motocyclettes selon la revendication 1, **caractérisé en ce que** lesdits groupes audio (O) sont connectés électriquement, au moyen de câbles spiralés (I), à une plaque de support (T) placée à l'intérieur d'une trappe d'inspection de bougies d'allumage (H) de la motocyclette, lesdits groupes audio (O) étant en outre raccordés audit tableau (B) au moyen de câbles lisses (G) venant de moyens de connexion (U, V) de ladite plaque de support (T).

10. Système de communication audio à hautes performances pour motocyclettes selon la revendication 1, **caractérisé en ce que** ledit dispositif périphérique (A) est installé sur l'un des guidons de ladite motocyclette et possède, à l'intérieur d'une coque conformée, au moins un dispositif de visualisation (A1) et une série de boutons de fonction (M, S, Y, W) et de boutons de réglage de volume audio (X, R).

11. Système de communication audio à hautes performances pour motocyclettes selon la revendication 1, **caractérisé en ce que** lesdites communications audio peuvent être commutées entre lesdits groupes audio (O) et peuvent en outre être interrompues et reprises par au moins un utilisateur, chacune desdites communications audio pouvant être sélectionnée en fond d'une autre communication dont le volume est plus élevé.

12. Système de communication audio à hautes performances pour motocyclettes selon la revendication 1, **caractérisé en ce que** ledit tableau (B) peut être raccordé électriquement à au moins un baladeur ou un lecteur de CD portable.

13. Système de communication audio à hautes performances pour motocyclettes selon la revendication 1, **caractérisé en ce que** ledit dispositif périphérique (A) comprend un bloc de commande à clavier (38), un microcontrôleur (39), qui commande le fonctionnement de tout le périphérique (A), et un étage de sortie (42) relié au dispositif de visualisation (A1).

14. Système de communication audio à hautes performances pour motocyclettes selon la revendication 1, **caractérisé en ce que** ledit tableau (B) comprend au moins un microcontrôleur (31), qui délivre en sortie des signaux audio à un amplificateur (29) puis, par le biais de blocs d'attente respectifs (27, 28), auxdits haut-parleurs et à d'autres sorties externes éventuelles (B4).

15. Système de communication audio à hautes performances pour motocyclettes selon la revendication 14, **caractérisé en ce que** ledit microcontrôleur (31) est raccordé à un tuner radio (33), équipé d'une antenne (34), à un décodeur RDS (32) et à une interface (20), permettant de gérer le signal téléphonique, ledit microcontrôleur (31) étant approprié pour communiquer avec un dispositif de commande (39) dudit dispositif périphérique (A) et pour délivrer en sortie une série de signaux de commande amplifiés par une pluralité de moyens d'amplification (21, 22), en se fondant sur l'engagement de dispositifs de commutation (S1, S2), qui activent ou désactivent lesdits microphones (L) des groupes audio (O) à des niveaux de sensibilité déterminés par des potentiomètres (23, 24) et conformément à des niveaux d'activation prévus par une série de capteurs vocaux (35, 36, 37).

16. Système de communication audio à hautes performances pour motocyclettes selon la revendication 15, **caractérisé en ce qu'**au moins un bloc de circuits d'alimentation, de protection et de filtrage (26) surveille le fonctionnement général du tableau (B), en se fondant sur les commandes venant de moyens d'allumage et d'alimentation (25) de la motocyclette.

17. Système de communication audio à hautes performances pour motocyclettes selon la revendication 1, **caractérisé en ce que** ledit tableau (B) et lesdits groupes audio (O) communiquent par une transmission sans fil du signal et, en particulier, sont raccordés par radio.

18. Système de communication audio à hautes performances pour motocyclettes selon la revendication 17, **caractérisé en ce qu'**au moins un premier module de réception/transmission (40), équipé d'une antenne relative (41), est raccordé à au moins un dispositif (29) d'amplification des signaux entrants placé à l'intérieur dudit tableau (B) et menant auxdits haut-parleurs des groupes audio (O), ledit premier module de réception/transmission (40) pouvant envoyer des signaux, qui sont captés par au moins une antenne (43, 44), associée à au moins un deuxième module de réception/transmission (45, 46), prévu à l'intérieur desdits groupes audio (O) et raccordés au groupe (47, 48) d'alimentation et d'amplification du signal raccordés respectivement à un microphone (L) et à une oreillette (J) desdits groupes audio (O).
